# EUROPEAN PATENT APPLICATION

(11) **EP 4 797 235 A1**
(43) Date of publication of application: **26.08.2026**
(21) Application number: 25160003.7
(22) Date of filing: 25.02.2025
(51) Int. Cl.: G08B 25/00, G08B 25/10, H04W 84/18

(54) **HOUSE CODING OF ALARM DEVICES WITH RF FUNCTIONALITY**

(71) Applicant: E.I. Technology Unlimited Company, Shannon, Co. Clare (IE)
(72) Inventor: O'SHEA, Daniel, Shannon (IE); RICHARDSON, David, Shannon (IE)
(74) Representative: Weldon O'Brien Ltd.

(57) **Abstract**

Devices such as fire alarm devices house code to form a system in an efficient manner with less user time required. A device receives a house code message (HCM), and (102) it reads the next serial number (SN) in the message. The device checks (104) if this SN already exists in the house code table (HCT). If not, in step 105 it adds the SN and its Repeat Level value to the HCT. There is (110) an iteration for each SN in the HCM until the HCM has been fully processed. The device calculates a new signature for its HCT. Importantly, if (112) this signature value is the same as that for all of the SNs in the received HCM then house coding is complete if the user instruction is received (114). If not (114) the device generates and sends (116) a fresh HCM, and this is received by all of the other devices within RF range. There are multiple cycles until all of the signature values in the HCM which are generated are the same.

## Description

### Introduction

The present invention relates to RF enabled alarm devices, such as fire or smoke alarm devices. More particularly, the invention relates to the "house coding" of alarm devices (alternatively referred to in this specification as "RF units" or "units") together.

House coding is the process in which units are networked or paired together into a single network which can then be used to pass RF messages throughout the whole system. In order to house code together, units transmit a unique house code message which other units in house code mode process in order to add the new serial number(s) to its house code table.

Our prior patent number EP2581891 describes a system in which each alarm device is adapted to, in a house code mode, automatically register in a monitoring cluster. The cluster is typically a subset of the full system, for example units on the same building floor in adjoining rooms/hallways.

The present invention is directed towards achieving enhanced automation in the manner of the devices pairing, and to provide improved user feedback confirming a successful house code process.

### Summary of the Invention

The invention provides a wireless network of individual RF alarm devices (or "units") which automatically all house code together as a full system. The user can manually induce the house code mode on a unit and each unit passes the unique serial numbers of the units through a mesh network, with each unit repeating the list of house coded serial numbers along with a signature (such as the CRC) of a house code table within the house code message so that all units within the system know the house code table status of all other units.

The status of the house code process may be shown locally at each unit through a series of user indications, such as but not limited to flashes, chirps, or other communications methodology such as Bluetooth, representing the number of units house coded by the individual unit.

The local indication to the user will change to a unique confirmation indication when the house code table of all units within the system is confirmed to match. This could be achieved through a number of methods such as but not limited to colour or lengths of flashes or chirps, or a confirmation message via another comms methodology such as Bluetooth.

Advantageously, the local indication at a single device can inform the user that all units within range have been house coded into a system.

The local indication will in some examples of the invention contain the number of units that have been house coded by the system.

We describe a device comprising a processor and a memory and an RF communication interface and being adapted to communicate with other devices within RF range by wirelessly transmitting messages, wherein each device processor is configured to store a unique serial number for the device and is configured to, automatically:
store a house code table HCT of its own serial number SN and the serial numbers of other devices, in which there is only one entry per unique serial number,
generate and send a house code message including:
   its unique serial number,
   a signature representing its current house code table;
receive house code messages HCM from the other devices and update its house code table with serial numbers and signatures received in the house code messages, each signature representing the house code table of the associated device, and
determine that all of the devices within range and suited to form a system have been house coded when the signature of its table and that of all of the other devices match, and then generate a user indication to indicate that all devices have been house coded.

In some preferred examples, each house code message HCM additionally includes,
device serial numbers SN that it has received in house code messages from the other devices, and
a signature for each other serial number that it has received in the most recent house code message massage.

In some preferred examples, each house code message HCM includes information about the associated device.

In some preferred examples, the signature has a size of no more than four bytes.

In some preferred examples, the signature has a size of no more than two bytes.

In some preferred examples, the signature is a cyclic redundancy check CRC value for the current house coding table.

In some preferred examples, an indication is given to the user that the signatures of all devices match, said devices thereby forming a system.

In some preferred examples, the device processor is configured to insert a repeat level value for each serial number, said value being incremented with each sending of a message with the associated serial number, and the device processor is configured to not process a serial number in a received house code message if the repeat level value exceeds a threshold, thereby limiting the maximum size of the system.

In some preferred examples, the device processor is configured to start a house coding process by receiving a user instruction, whereby in use each other device continues house coding by processing each house code message as it is received.

In some preferred examples, the device processor is configured to listen for a different protocol and to automatically switch to a different messaging protocol if received.

In some preferred examples, the processor is configured to perform said listening and switching to also include new physical layers of RF such as frequency, data rate, deviation, modulation type and sync word.

In some preferred examples, the device processor is configured to generate a user indication if it switches to a different protocol

In some preferred examples, the device processor is configured to establish a direct connection with a central device if one is in range, while also maintaining a standard mesh topology

In some preferred examples, the device processor is configured to establish a star network connection with other nodes within range while maintaining mesh network topology

In some preferred examples, the processor is configured to monitor and report a heartbeat from all connected devices within a house coded system of devices while maintaining mesh network topology.

In some preferred examples, the device processor is configured to automatically transition to a mesh network topology if the link with the device acting as a central device is lost.

We also describe a system comprising a plurality of devices of any example described herein.

In some preferred examples, the devices include alarm devices each alarm device comprising a condition sensor and the processor is configured to process signals from said sensor to determine if an alarm event occurs.

In some preferred examples, the devices also include at least one edge device which is not configured for condition sensing.

### Detailed Description of the Invention

The invention will be more clearly understood from the following description of some embodiments thereof, given by way of example only with reference to the accompanying drawings in which:
Fig. 1(a) is an example of a system of five alarm devices, or "units" which are house coded together, and Fig. 1(b) is a schematic diagram of each unit;
Fig. 2 shows the structure of a house code message generated and sent by each unit,
Fig. 3 is a flow diagram illustrating the major steps during house coding in a system of units;
Figs. 4(a) to (e) are examples of different possible house coding message formats; and
Fig. 5 is an example of a system which is paired via a star network with mesh fallback.

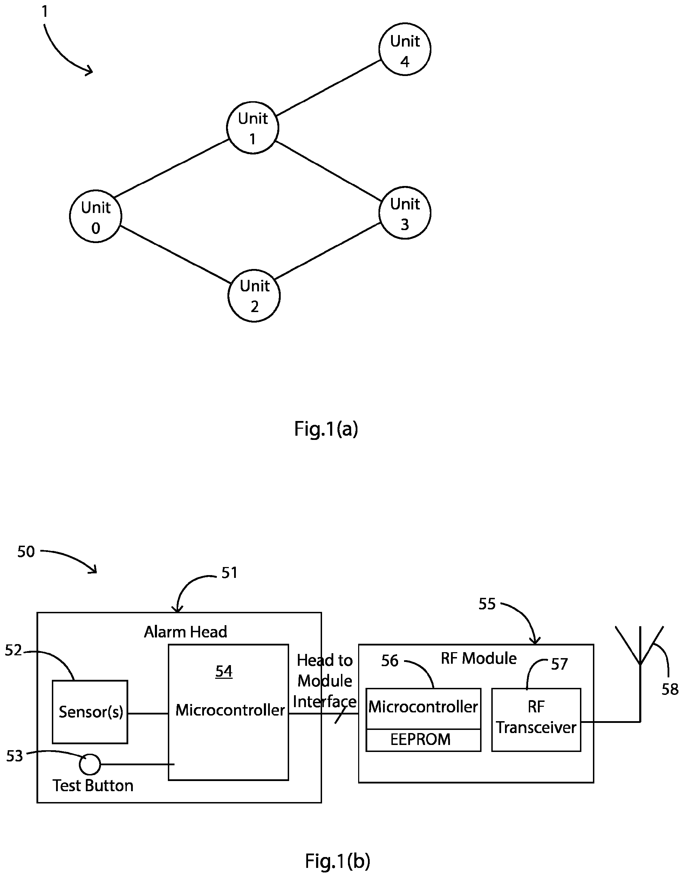

This present invention relates to the "pairing" of RF devices together into a single system which when house coded together, will pass RF messages throughout the whole system, but not interfere with neighbouring systems. Fig. 1(a) shows a system of six units, and that they communicate as a mesh network. There may be any desired number of units, however in practice there will rarely be more than one hundred. Once house coded, they form a system of devices. As shown in Fig. 1(b) each unit is indicated by the numeral 50 and in this example has an alarm head 51 with smoke and heat sensors 52 and a test button linked with a microcontroller and memory 54. The test head 51 is linked with an RF module 55 having a microcontroller 56 linked with an RF transceiver 57, in turn linked with an antenna 58. Non-volatile memory is included in the blocks 51 and 55 for storage of a house code table and other settings. At this hardware level the alarm device is of known construction.

The present invention also includes provision for the creation of a monitored star network of devices on top of a mesh network between devices for the transmission of messages to all devices in a system as part of the house coding process.

In this specification the terms "unit" and "device" are used interchangeably: a device with RF communication functionality and a processor. Examples are alarm devices, such as fire alarm devices.

In various examples, each device has a processor (54), a wireless communication interface (55), a condition sensor (52), and a user interface (53), the device processor being adapted to communicate with other devices within RF range by wirelessly transmitting messages via the transceiver 57 and antenna 58. Any suitable processer may be used, such as TI CC1311^{™}, provided an RF signal can be both sent and received. In some examples of the invention, at least some of the devices do not include condition sensors. They may, for example, be edge communication units. In other examples the devices are not alarm devices and do not include condition sensors. However, the invention applies particularly well to alarm devices for fire or gas (such as CO), including smoke and heat alarm devices. A system of the invention can have a combination of such devices.

Advantageously, a device (or "unit") can provide a confirmation signal to the user that the house code process has been successful, meaning that all units within the system are house coded together correctly. This confirms that the list of serial numbers stored by each unit in the system is identical.

Each unit can be placed by the user in a house code mode using a method such as, but not limited to, pressing a button or initialising the mode via an app-based mobile device. In this mode, the unit transmits its unique serial number ("SN") within an RF message along with the serial numbers of other units which it has house coded with. While in this mode, each RF unit is also listening for messages from other units in the system. When it receives a house code message, it stores the received serial numbers within its house code table ("HCT"). Instead of requiring the user to confirm the correct number of units are known by every individual RF unit in the system, the feedback to the user will indicate not only the number of units known by an individual unit, but also that all other devices in the system know all the same units. This removes any doubt or requirement to confirm the status of all units within the system.

After successful house coding each RF unit in the network stores in its house table ("HT") a list of known serial numbers and acts only upon messages from units with these serial numbers.

During house coding, each RF unit transmits its own serial number, along with the serial numbers of all other devices that it has house coded with during the house code process.

To enter house code mode, the user must take an action to start the house code mode such as but not limited to:
- Powering up a unit.
- Pressing a button.
- Triggering house code mode through an app.

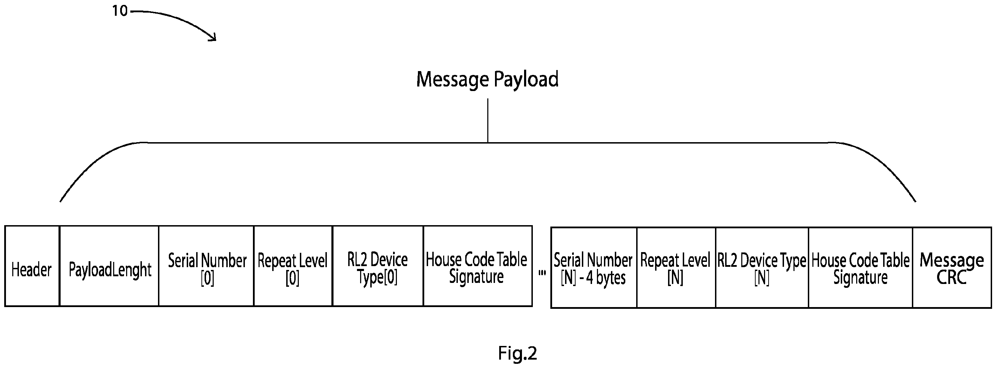

While in house code mode all RF units in this example of the invention transmit a house code message as shown in Fig. 2, which contains the source (its own) serial number and unit details, along with the serial numbers and details of other units within its table. To reduce the overall message length, the entire information may be split into multiple smaller messages.

To limit the number of hops that are possible within the system a repeat level for each individual unit can be transmitted within the house code message. This repeat level for each serial number is stored and transmitted at one level higher than it was received. Therefore, by placing a maximum value on the repeat level, units which receive a serial number with a repeat level higher than the maximum value will not store this serial number in its house code table. Thus, this limits the maximum size and range of the system.

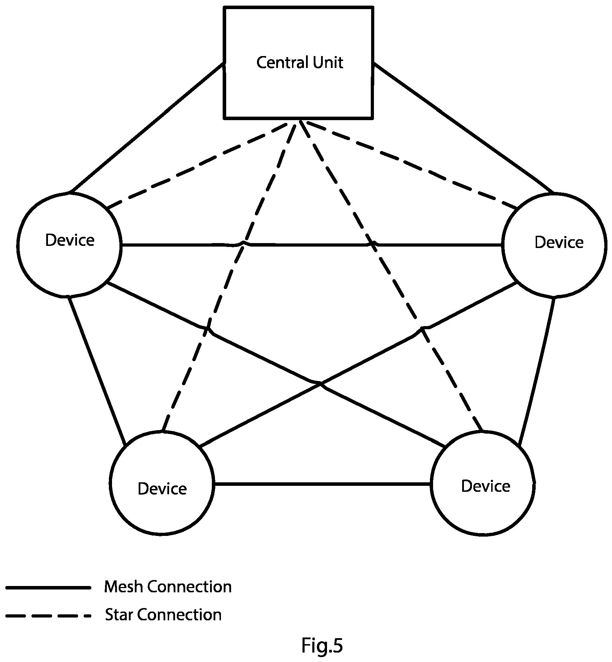

A device type field is also included in this example to allow for variations of the network topology. For example, a device could be an onward connector IOT device (border router), a central controller device, a repeating node or an end node. In the case of an IOT connected device within the network, all nodes can attempt to establish a direct connection to this device for the onward transmission of data to an IOT platform. In the case of a central IOT or controller device, all nodes can attempt to create a direct connection for the purpose of monitoring of the status of all nodes within the system. This allows for the creation of a star network direct between nodes and the central unit on top of the mesh network between all devices as shown in Fig 5. This can be achieved automatically by the system or through user intervention during the house code process.

As shown in Fig. 2 the house code message (HCM) in one example includes the following fields:
Header;
Payload Length;
For itself:
   its Serial Number,
   a Repeat Level of zero,
   an identifier of its device type, and
   a House Code Table signature (in one example a table CRC).
For each other unit for which it has received a house code message:
   The other unit's Serial Number.
   The Repeat Level for that serial number in the last received message which included this serial number.
   The other device type.
   The current House Code Table signature.
A message CRC.

For example, if there are five units, and a unit has received a house code message from all four other units, the message it generates will have the following:
A message header field value.
A payload length field value.
For itself, a set of four fields for: its own Serial Number, a repeat level of zero, its device type, and a house code table CRC generated when it is the only device in the House Code Table.
For each of the other devices, a set of four fields for: the other device's Serial Number, a repeat level (RL) of the message received from that device, the type of the other device, and a house code table signature generated by that other device when it generated its last house code message.
A message CRC.

### House Code Table Signature

Transmission of the house code table signature with each serial number within the house code message is very advantageous. Each individual unit within the system will calculate its own signature based on the list of serial numbers within its table at that point in time. For example, this can provide a unique 16-bit value which represents the house code table as it stands in that unit at that time. All units in the house code group (system) use this value to check if the other units within the system know both the same number of devices and the same individual devices determine that they have the same house code table as all other units within the system. The signature may be generated in any suitable known manner, and in this example, it is generated as a CRC.

For the signature to be computed consistently between different units, it is important that the house code table is sorted in consistent format such as alphanumeric order of the unique serial numbers as new units are added to the table. This ensures that the value calculated is the same across all units in the system even though different devices may complete the house process in different orders of serial number.

A CRC is a particularly effective signature, but it is envisaged that other signature algorithms may be used provided it generates a single signature for a table irrespective of which device processor generates it. A CRC algorithm is particularly good because it provides a short signature, only two bytes in length.

### Example

When Unit 0 is placed in house code mode, it sends a message as shown in Fig. 2 with its serial number, repeat level, device type and house code table signature. It indicates through a series of LED flashes (or chirps in other examples) to the user that there is one unit in the system.

When Unit 1 is placed in house code mode, it too will send out a house code message according to Fig. 2 with its unique serial number. When Unit 0 hears this message, it will add the serial number of Unit 1 to its house code table and transmit a new house code message which includes its serial number, that of Unit 1, and an updated house code table signature. When Unit 1 receives this new message, it will see that the signature of its house code table and the signature of Unit 0 house code table are matching, as both will contain the serial number of Unit 0 and Unit 1. At this point the indication to the user would change to, for example, a different colour LED flash, or different temporal tone sound to indicate that it knows two units and both units have the same house code table and so this install is successful so far. This is a simple system, with only two units. However as shown in Fig. 1 more units may be added to expand the system.

As further units are added, the indication to the user will revert back to the incomplete house code process indications until the signature of the house code table of all units throughout the system match. The system size is only limited by the number of serial numbers which can be transmitted within the message structure and the size of the memory block which is used to store the house code table. Once the coding process is complete the user can manually exit the house code state by activating a button or similar method to exit the house code state. At this point the exit can be transmitted from the source unit to all other units in the system.

The following is an example of a house code table.

| **Position** | **Serial Number** | **Signature** |
|---|---|---|
| **1** | 0x00000001 | 0x6B2A |
| **2** | 0x00000002 | 0x2E52 |
| **N** | ... | ... |

The signature allows the units to confirm network integrity by providing a means of checking that the units in the network share a complete list of all serial numbers within the network. To achieve this signature, hashing functions such as SHA256 and others can be used. CRC can also be used and provides advantages given the availability of CRC hardware within many microcontrollers and the reduced output length in comparison to other hashing functions. Using CRC16 reduces the overhead of the integrity check to 2-bytes per node instead of 32-bytes per node for SHA256. Examples are given in the above table.

When calculating the signature, the table in each unit is sorted in a consistent manner across all devices. This ensures that the signature will match for all devices in the network which contain the same serial numbers. As the table is sorted in a consistent manner to calculate a verifiable signature, it also provides the benefit of allowing individual nodes to determine their position within the network. Once all devices have verified that the house coding tables are shared correctly, they will at this point all share the same house code table including both the number of devices, the full list of serial numbers but also in the same order. This provides benefits for various network operations as all devices will know the serial number for the first device in the table and so forth.

In summary, during the house coding process, each device sends messages containing the serial numbers it knows. This allows a mesh network to be formed over multiple hops, as shown in Fig. 1. In addition to the serial numbers, a signature calculated over the serial number table is also sent, together with the signatures received from all known serial numbers. As it takes time for all devices to receive the full set of serial numbers from the network, the calculated signatures are also changing as the tables build up. When all devices have received the full set of serial numbers, it will still take several messages from each device to propagate the network signature to all nodes. House code is determined to be complete when each serial number in the house code table and its associated signature match all other nodes in the network.

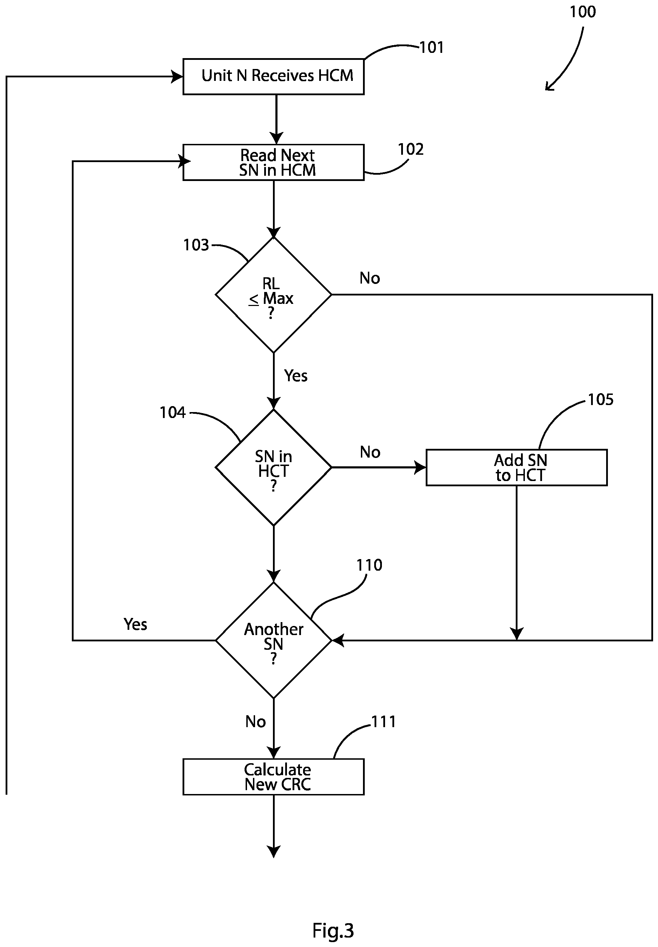

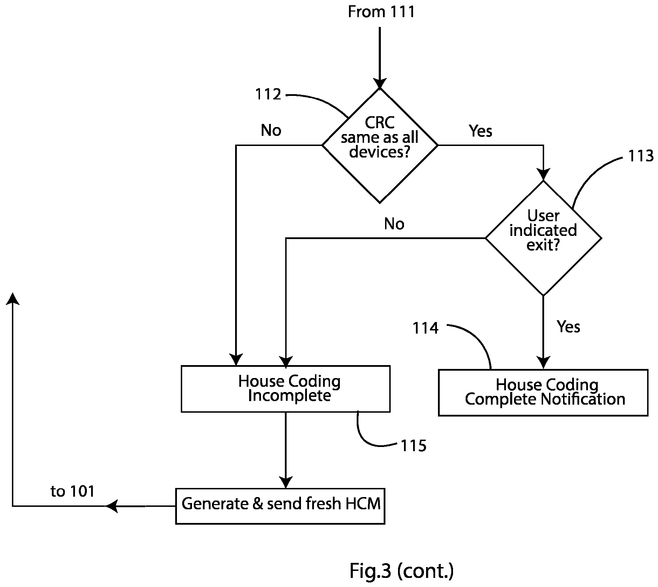

The method is represented in flow chart format in Fig. 3, as a method 100. In step 101 a unit receives a house code message (HCM), and in step 102 it reads the next serial number (SN) in the message. When this HCM is first received the next SN is the first one, and in step 103 the unit's processor checks if the Repeat Level value is higher than a preset maximum value. If it is higher than the set maximum value this serial number is not processed. This limits the maximum size and range of the system. If it is equal to or lower than this set maximum it checks in step 104 if this SN already exists in the house code table (HCT). If not, in step 105 it adds the SN and its Repeat Level value to the HCT.

As indicated by the decision step 110, there is an iteration through steps 102 to 110 for each SN in the HCM until the HCM has been fully processed. At this stage the unit's processor calculates a new signature (in this example a CRC) for its HCT. Importantly, if (decision step 112) this signature value is the same as that for all of the SNs in the received HCM and the user instruction to end coding is received in step 113 then house coding is complete, step 114. If not, house coding is incomplete (115), a user notification (e.g. red LED flash) to this effect is generated, and in step 116 the unit's processor generates and sends a fresh HCM, and this is received by all of the other units within RF range and the method 100 is repeated for each. There are multiple cycles until all of the signature values in the HCM which are generated are the same. A benefit of the user interaction is that the user has confidence that house coding is complete, and the processor does not know how many units are being added. However, in other examples a user instruction to end house coding is not essential, the processor automatically ending it once the signatures all match. Ending, may alternatively be based on a timeout or an RF signal from a controller.

Another advantageous aspect is that each unit updates its HCT with serial numbers in alphanumeric order, and so each unit has a fixed position in the table when house coding is complete. All units follow the same ordering process and so all will have the same row number for each unit. Accordingly, each unit knows its position in the system. Hence when operating in its normal activities after house coding it can uses time division a multiplexed communication with a fixed frame for each unit.

### CRC Calculation

Cyclic redundancy check is a common method of data verification used within digital storage to detect any errors. However, this invention utilises CRC in a different manner in that the CRC is not checking for data errors, but rather to check if the same data is stored across multiple memory locations, i.e. different RF units (alarm devices) within the system.

A benefit of CRC computation is that it readily provides a short signature, in this example only two bytes. It can however configured to provide a longer signature if the number of units is large enough to warrant it and there is sufficient processing power and memory. It is preferred that the signature is no longer than four bytes, and more preferred that it is no more than two bytes, the smaller size contributing to improved processing efficiency and message lengths.

### Alternative House Coding Messages (HCMs)

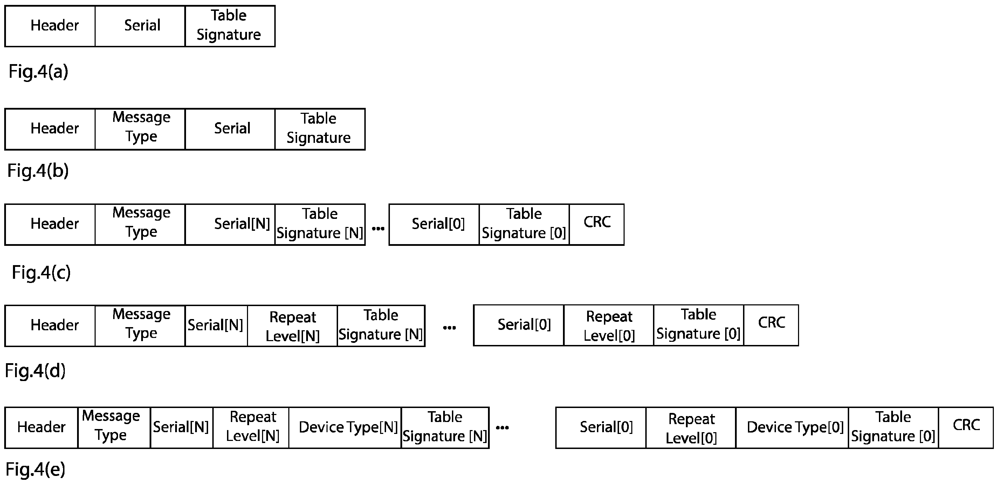

The HCM shown in Fig. 2 is particularly effective. However, it is envisaged that it may take other forms, as shown in the alternatives shown in Fig. 4(a) to (f), as follows.
Fig. 4(a)
   The HCM has the serial number and a table signature. This allows each device to compare its own calculated table signature with those it receives from other devices in the group. If all table signatures match, it confirms that the house code group know the same devices.
Fig. 4(b)
   This additionally includes a Message Type field, thereby facilitating more efficient processing by the receiving unit's processor.
Fig. 4(c)
   This also includes the Serial Number (SN) and associated table signature of every unit that was included in its received HCM. This allows for repeating of serial numbers within the system, increasing system range.
Fig. 4(d)
   This also includes a repeat level, which can be used to limit the maximum range of the system.
Fig. 4(e)
   This is a format similar to that shown in Fig. 2, including in this case device type. A device type indicator allows additional processing to allow for example setting up of both a star network and a mesh network.

In all cases a message CRC can be applied as shown in Fig. 2. This provides a means for the processor to confirm message integrity before processing the contents of the message.

### Protocol Fallback

In the case of multiple protocols and/or different physical layers existing within a family of products, it may be useful to automatically switch protocol during the house coding process. It is especially useful in the case of a newly developed protocol whereby older protocol devices could exist in a system with new devices.

Different physical layer settings could be used within protocols, but a similar scheme could also be used if the physical layer were the same. During the installation process, multiple protocols are checked, with rules applied to select the appropriate protocol for the situation. Physical layer settings can include, for example frequency, data rate, deviation, modulation type and sync word

The house coding method described here may be referred to as "RadioLINK 2". Each device processor is programmed with the ability to fallback to an older method, referred to here as "RadioLINK 1" (such as that described in EP2581891) if an attempt is made to install a mix of devices at least one of which only has RadioLINK 1 capability. During RadioLINK 2 house coding (default), the radio will listen for both RadioLINK 1 and RadioLINK 2 house code messages. If a RadioLINK 1 house code message is received the device switches over to RadioLINK 1 and operates in this mode unless reset.

### Dual Network Topology

Referring to Fig. 5, a device of some embodiments has a processor which is configured to establish a direct connection with a central device if one is in range, while also maintaining a mesh topology as described above. The central device may be a device which has transitioned to act as a central device. The device processor in some examples is configured to establish a star network connection with other devices within range while maintaining a mesh network topology. Preferably, the processor is configured to monitor and report a heartbeat from all devices within a house coded system of devices while maintaining the mesh network topology. Preferably, the device processor is configured to automatically transition to a mesh network topology if the link with the device acting as a central device is lost.

The units have the ability to create dual network topologies automatically during the house code process. Through the use of a device type identifier in the HCMs, all units in the system can be made aware of the type of every device within the system. In the case of central, most likely mains powered, devices in the system each device can attempt to create a direct star network topology connection to this device. This connection can then be used to transmit data directly back to the central unit, create a monitored path between nodes and the central unit to ensure system integrity, pass instruction messages direct from the central unit to particular nodes. This connection can be automatically established when a central device type exists within the house code table. In a case that there are more than one central device in the house code table multiple star networks could sit on top of each other. In this case, all devices in the system can transmit to the whole system using the mesh network which is in coexistence with the star networks.

In another configuration, the monitored star network could be used to pass a message throughout the system. This allows for full monitoring and guaranteed system connectivity of all links used for the primary message paths. In this case a node would transmit a message to a central unit which would then send the message to all other nodes within the system. This ensures that all messages are sent along monitored paths. In the event of failed transmission or a broken monitored link, the system can automatically fall back to a mesh network topology to allow for message repeating on an alternative path to the broken monitored link.

Components of embodiments can be employed in other embodiments in a manner as would be understood by a person of ordinary skill in the art. The invention is not limited to the embodiments described but may be varied in construction and detail. For example, the term "processor" denotes one or multiple hardware processor chips in a circuit in a device. For example, there may be one processor for the condition sensing and other device functions and a different processor for RF communication, as shown in Fig. 1(a). However, in other examples these functions may be integrated.

## Claims

1. A device (50) comprising a processor and a memory (54, 56) and an RF communication interface (57) and being adapted to communicate with other devices within RF range by wirelessly transmitting messages, wherein each device processor is configured to store a unique serial number for the device and is configured to, automatically:
store (105) a house code table (HCT) of its own serial number (SN) and the serial numbers of other devices, in which there is only one entry per unique serial number,
generate (111) and send a house code message (10) including:
its unique serial number,
a signature representing its current house code table;
receive (101) house code messages (10) from the other devices and update (105) its house code table with serial numbers and signatures received in the house code messages, each signature representing the house code table of the associated device, and
determine that all of the devices (50) within range and suited to form a system have been house coded when the signature of its table and that of all of the other devices match, and then generate a user indication to indicate that all devices have been house coded.

2. A device as claimed in claim 1, wherein each house code message (10) additionally includes,
device serial numbers (SN) that it has received in house code messages from the other devices, and
a signature for each other serial number that it has received in the most recent house code message massage.

3. A device as claimed in claim 2, wherein each house code message (HCM) includes information about the associated device.

4. A device as claimed in any preceding claim, wherein the signature has a size of no more than four bytes, and optionally the signature has a size of no more than two bytes.

5. A device as claimed in any preceding claim, wherein the signature is a cyclic redundancy check CRC value for the current house coding table.

6. A device as claimed in any preceding claim, wherein an indication is given to the user that the signatures of all devices match, said devices thereby forming a system.

7. A device as claimed in any preceding claim, wherein the device processor (54, 57) is configured to insert a repeat level value for each serial number, said value being incremented with each sending of a message with the associated serial number, and the device processor is configured to not process a serial number in a received house code message if the repeat level value exceeds a threshold, thereby limiting the maximum size of the system.

8. A device as claimed in any preceding claim, wherein the device processor is configured to start a house coding process by receiving a user instruction (53), whereby in use each other device continues house coding by processing each house code message as it is received.

9. A device as claimed in any preceding claim, wherein the device processor is configured to listen for a different protocol and to automatically switch to a different messaging protocol if received; and wherein the processor is configured to perform said listening and switching to also include new physical layers of RF such as frequency, data rate, deviation, modulation type and sync word.

10. A device as claimed in claim 9, wherein the device processor is configured to generate a user indication if it switches to a different protocol.

11. A device as claimed in any preceding claim, wherein the device processor is configured to establish a direct connection with a central device if one is in range, while also maintaining a standard mesh topology; and wherein the device processor is configured to establish a star network connection with other nodes within range while maintaining mesh network topology.

12. A device as claimed in claim 11, wherein the processor is configured to monitor and report a heartbeat from all connected devices within a house coded system of devices while maintaining mesh network topology; and wherein the device processor is configured to automatically transition to a mesh network topology if the link with the device acting as a central device is lost.

13. A system comprising a plurality of devices of any preceding claim.

14. A system as claimed in claim 13, wherein the devices include alarm devices each alarm device comprising a condition sensor (52) and the processor is configured to process signals from said sensor to determine if an alarm event occurs.

15. A system as claimed in claim 14 wherein the devices also include at least one edge device which is not configured for condition sensing.
